# EUROPEAN PATENT SPECIFICATION

(11) **EP 1 403 172 B1**
(45) Date of publication and mention of the grant of the patent: **29.10.2008**
(21) Application number: 03020605.6
(22) Date of filing: 10.09.2003
(51) Int. Cl.: B62D 9/02, B62K 5/02, B62K 25/04

(54) **Three-wheeled vehicle provided with swinging mechanism**
Dreirädriges Fahrzeug mit Schwingmechanismus
Véhicule à trois roues avec dispositif oscillant

(30) Priority: 25.09.2002 JP 2002279734
(43) Date of publication of application: 31.03.2004
(73) Proprietor: HONDA GIKEN KOGYO KABUSHIKI KAISHA, Minato-ku, Tokyo (JP)
(72) Inventor: Takayanagi, Shinji, 1-4-1 Chuo, Wako-shi, Saitama (JP); Makuta, Yohei, 1-4-1 Chuo, Wako-shi, Saitama (JP)
(74) Representative: Liska, Horst

(56) References cited:
- DE-U- 29 705 386
- FR-A- 2 689 082
- US-A- 4 974 863
- US-B1- 6 250 649

## Description

The present invention relates to a three-wheeled vehicle according to the preamble part of claim 1, provided with a swinging mechanism in which a swinging shock absorber is miniaturized and the degree of freedom in arranging a swinging shaft is increased.

Athree-wheeled vehicle provided with aswinging mechanism for swinging the body crosswise is known (for example, refer to a patent document 1).

### Patent document 1:

Japanese published examined patent application No. Heil-23356 (Figs. 1, 2 and 4 on pp. 2 and 3)

Fig. 1 of the patent application 1 will be described referring to Fig. 17 below, Fig. 2 of the patent document 1 will be described referring to Fig. 18 below and Fig. 4 of the patent document 1 will be described referring to Fig. 19 below. Reference numbers are newly allocated.

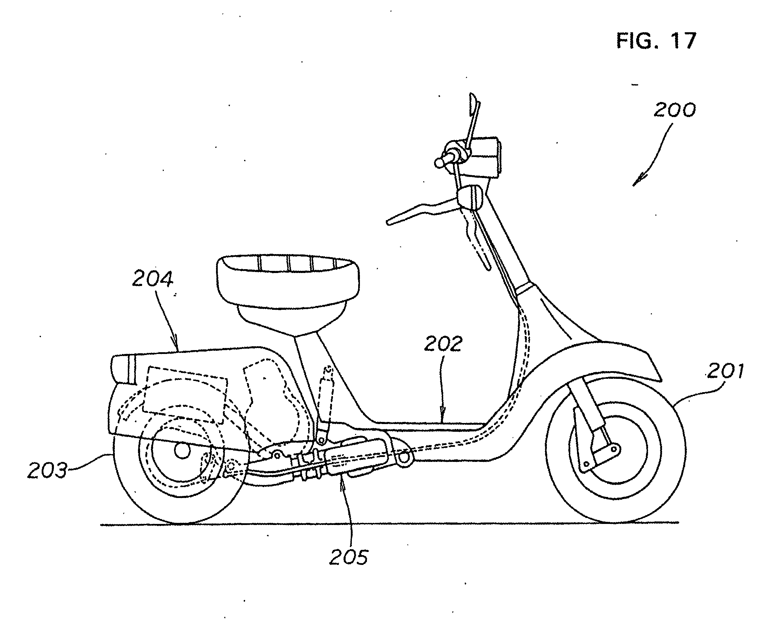

Fig. 17 is a side view showing a conventional type three-wheeled vehicle. The swing-type three-wheeled vehicle 200 is a vehicle composed of a front body 202 provided with one front wheel 201 and a rear body 204 provided with two rear wheels 203 and provided with a swinging joint 205 between the front body 202 and the rear body 204 for swinging the front body 202 for the rear body 204 crosswise.

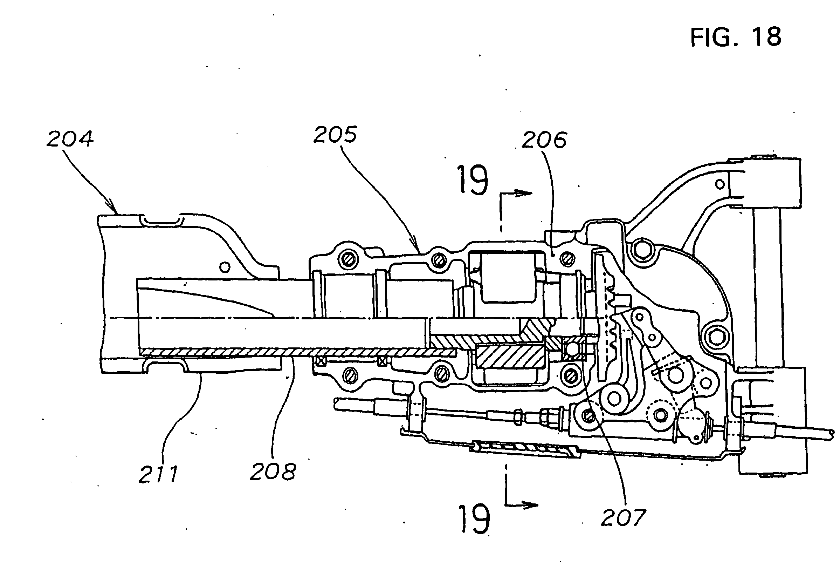

Fig. 18 is a plan (a partial sectional view) showing the swinging joint shown in Fig. 17 and shows a state in which a spindle 208 is rotatably attached to a case 206 of the swinging joint 205 via a bearing 207 and a rear frame 211 forming the rear body 204 is attached to the spindle 208.

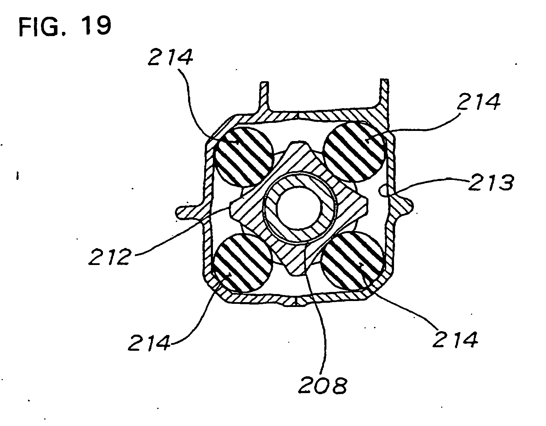

Fig. 19 is a sectional view viewed along a line 19-19 shown in Fig. 18 and shows that structure that an elastic body 214 is held between a cam 212 and a cylindrical inner wall 213 is acquired by attaching the cam 212 the cross section of which is substantially rectangular to the spindle 208, surrounding the cam 212 with the substantially rectangular cylindrical inner wall 213 and arranging the elastic body 214 at four corners of the cylindrical inner wall 213. When the cam212 is relatively turned for the cylindrical inner wall 213, the elastic body 214 is deflected and the swing of the front body 202 shown in Fig. 17 is buffered.

As the spindle 208 shown in Fig. 18 couples the front body 202 and the rear body 204, the outside diameter is required to be increased to increase the strength. When the outside diameter of the spindle 208 is large, the cylindrical inner wall 213 for housing the elastic body 214 shown in Fig. 19 is also large-sized. Hereby, large space is required around a swinging shaf t and the degree of f reedom in arranging the swinging shaft is reduced.

A three-wheeled vehicle according to the preamble part of claim 1 is disclosed in US 4,974,863 A and comprises a swinging mechanism with a swinging shaft, wherein a first member is provided between a member on the side of the left rear wheel and a member on the side of the body frame, and a second member is provided between a member on the side of the right rear wheel and a member on the side of the body frame. First and second members are formed as spindles, wherein relative movement between the spindles and the members on the sides of the left and right rear wheels is restricted by engagement in a slot hole.

Then, the object of the invention is to miniaturize a swinging shock absorber and to increase the degree of freedom in arranging a swinging shaft by improving the three-wheeled vehicle provided with the swinging mechanism.

According to the present invention, this object is achieved by a three-wheeled vehicle according to claim 1. Accordingly, there is provided a three-wheeled vehicle provided with a swinging mechanism as a swinging shock absorber provided with a swinging shaft for crosswise swinging a body frame for right and left two rear wheels and a resilient member between a member on the side of the rear wheels and a member on the side of the body frame for generating reaction force that tries to return the body frame to an original position when the body frame is swung around the swinging shaft and is characterized in that in the swinging shock absorber, a spindle is provided separately from the swinging shaft and either of the member on the side of the rear wheel or the member on the side of the body frame is turnably attached to the spindle.

The resilient member can be provided around the spindle by providing the spindle separately from the swinging shaft and if the spindle is thinned, the swinging shock absorber can be miniaturized. Besides, large space is not required around the swinging shaft and the degree of freedom in arranging the swinging shaft can be increased.

Claim 2 is characterized in that the member on the side of the body frame is attached to the rear of the body frame.
The swinging shock absorber can be maintained from the rear of the body frame and the maintenance is facilitated.

Claim 3 is characterized in that the member on the side of the rear wheels is attached to coupling means when right and left suspension arms are coupled to the body frame via resilient means and the coupling means provided at both ends of the resilient means.
The buffer action of the suspension arm can be made by the resilient means, as the member on the side of the rear wheels is attached to the coupling means for coupling the suspension arm to the resilient means, no installation member for the member on the side of the rearwheels is required tobe speciallyprovided and the number of parts can be prevented from being increased.

Claim 4 is characterized in that the coupling means is composed of links swingably attached to the right and left suspension arms and substantially L-type bell cranks swingably attached to the respective ends of these links, when a first fulcrum is respectively provided to curved parts of these bell cranks and second and third fulcrums are provided to two ends of each bell crank, the first fulcrum is attached to the end of the link, the second fulcrums are connected via a connecting member, the connecting member is swingably attached to the side of the body, the third fulcrum is attached to each end of the resilient means and the member on the side of the rear wheels is attached to the connecting member.

As the connecting member is moved only in parallel by the right and left links even if the body frame is crosswise swung, relative revolution is caused between the connecting member and the body frame and the resilient member can be pressed by the member on the side of the rear wheels attached to the connecting member and the member on the side of the body frame.

Claim 5 is characterized in that the member on the side of the body frame is a divided case for housing the resilient member.
As the member on the side of the body frame is the divided case, the case is disassembled and the swinging shock absorber can be easily maintained.

An embodiment of the invention will be described based upon attached drawings below, in which:
Fig. 1 is a side view showing a three-wheeled vehicle provided with a swinging mechanism according to the invention;
Fig. 2 is a side view showing a main part of the three-wheeled vehicle according to the invention;
Fig. 3 is a plan showing the three-wheeled vehicle according to the invention;
Fig. 4 is a plan showing the main part of the three-wheeled vehicle according to the invention;
Fig. 5 is a first perspective view showing the three-wheeled vehicle according to the invention;
Fig. 6 is a back view showing the three-wheeled vehicle according to the invention;
Fig. 7 is a second perspective view showing the three-wheeled vehicle according to the invention;
Figs. 8 are explanatory drawings for explaining the swinging mechanism according to the invention;
Fig. 9 is a third perspective view showing the three-wheeled vehicle according to the invention;
Fig. 10 is a plan showing a body frame according to the invention;
Fig. 11 is a back view showing a rear suspension according to the invention;
Fig. 12 shows the first action of the rear suspension according to the invention;
Fig. 13 shows the second action of the rear suspension according to the invention;
Fig. 14 shows the third action of the rear suspension according to the invention;
Fig. 15 shows the fourth action of the rear suspension according to the invention;
Fig. 16 shows the fifth action of the rear suspension according to the invention;
Fig. 17 is a side view showing a conventional type three-wheeled vehicle;
Fig. 18 is a plan showing a swinging joint shown in Fig. 17; and
Fig. 19 is a sectional view viewed along a line 19-19 shown in Fig. 18.

The drawings shall be viewed in a direction of a reference number.

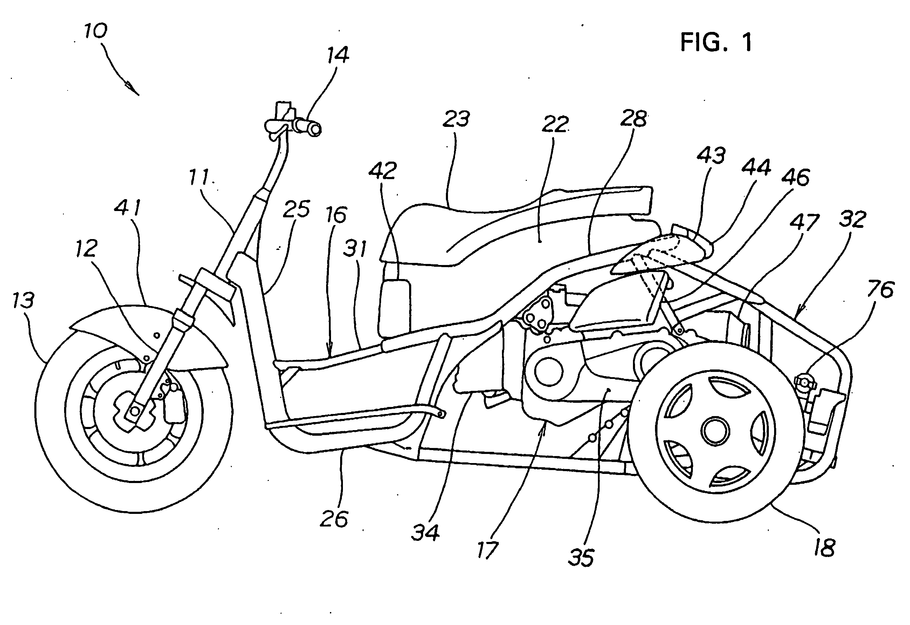

Fig. 1 is a side view showing a three-wheeled vehicle provided with a swinging mechanism according to the invention. The three-wheeled vehicle provided with the swinging mechanism 10 (hereinafter called the three-wheeledvehicle 10) is composed of a front fork 12 steerably attached to a head pipe 11 via a steering shaft not shown, a front wheel 13 attached to the lower end of the front fork 12, a handlebar 14 integrated with the front fork 12, a body frame 16 attached to the rear of the head pipe 11, a power unit 17 attached to the rear of the body frame 16, right and left rear wheels 21, 18 (the inside rear wheel 21 is not shown) driven by the power unit 17, a housing box 22 attached to an upper part of the body frame 16 and a seat 23 openably attached to an upper part of the housing box 22.

The body frame 16 is composed of a down pipe 25 extended backward and diagonally downward from the head pipe 11, a pair of right and left lower pipes 27, 26 (the inside lower pipe 27 is not shown) extended backward from a lower part of the down pipe 25 and further, extended backward and diagonal ly upward, a center upper frame 28 coupled to the respective rears of these lower pipes 27, 26 a center pipe 31 extended backward from the down pipe 25 and coupled to the center upper frame 28 and a J-shaped frame 32 when it is viewed from the side coupled to the rear of each lower pipe 27, 26 and the rear side of the center upper frame 28.

The center upper frame 28 is a member for supporting the housing box 22 and suspending the power unit 17.
The J-shaped frame 32 is a member for attaching a rear suspension that suspends the rear wheels 18, 21 and the swinging mechanism allowing a lateral swing on the side of the body frame 16 for the side of the rear suspension. The rear suspension and the swinging mechanism will be described in detail later.

The power unit 17 is composed of an engine 34 arranged on the front side of the body and a transmission mechanism 35 that transmits the power of the engine 34 to the rear wheels 18, 21.
A reference number 41 denotes a front fender that covers the front wheel 13, 42 denotes a battery, 43 denotes a winker, 44 denotes a tail lamp, 46 denotes an air cleaner and 47 denotes a muffler.

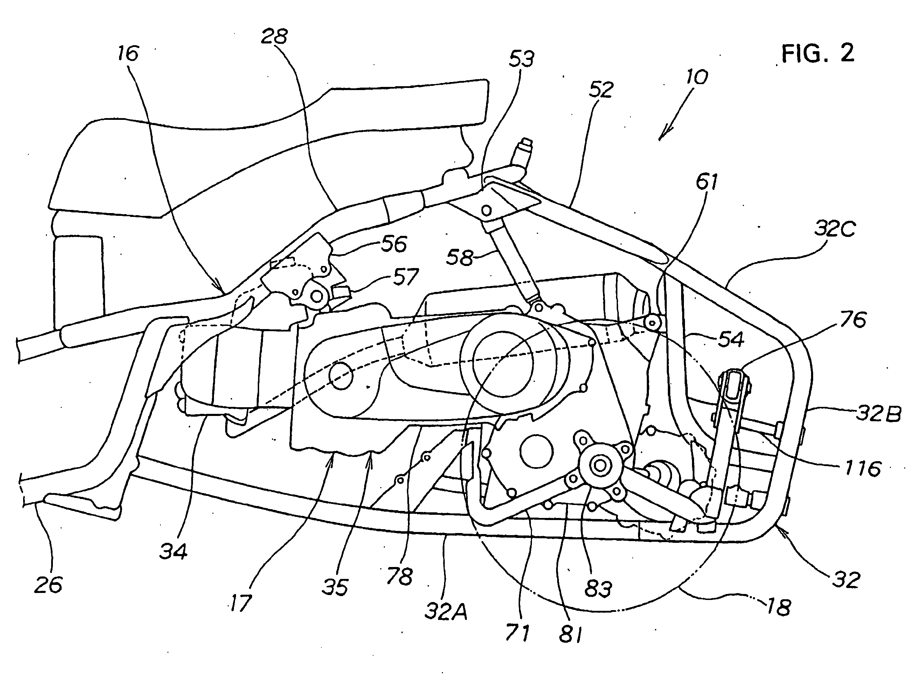

Fig. 2 is a side view showing a main part of the three-wheeled vehicle according to the invention. Fig. 2 shows that the rear of the power unit 17 is supported by laying each coupling pipe 52, 52 (the inside coupling pipe 52 is not shown) between the J-shaped frame 32 and the center upper frame 28 to couple an upper part of the J-shaped frame 32 and the rear ends of the center upper frame 28, attaching each reinforcing plate 53, 53 to each coupling pipe 52 , 52 and the center upper frame 28, attaching an L-type pipe 54 of substantially an L type when it is viewed from the side to the inside of the rear of the J-shaped frame 32, attaching brackets 56, 56 (the inside bracket 56 is not shown) to the center upper frame 28, attaching an upper part of the front of the power unit 17 to these brackets 56, 56 via an intermediate member 57 and extending a supporting rod 58 from the reinforcing plates 53,53 downward and diagonally backward, and shows that the rear end of the power unit 17 is attached by extending a projection 61 from the front of the L-type pipe 54 forward. Reference numbers 32A, 32B, 32C denote a substantially horizontal lower horizontal part of the J-shaped frame 32, an inclined part at the rear end the upper end side of which is extended at the back of the lower end side and an upper inclined part the front end of which is higher than the rear end.

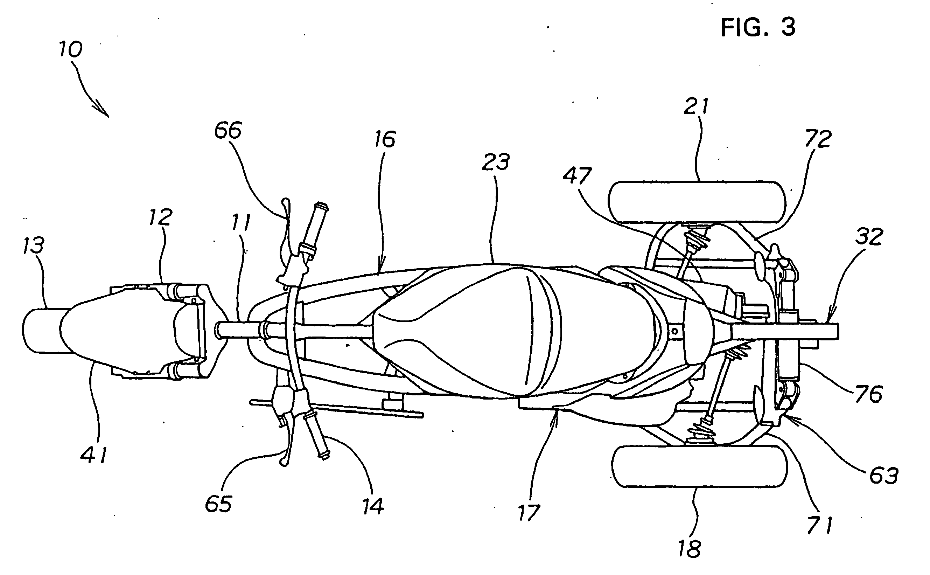

Fig. 3 is a plan showing the three-wheeled vehicle according to the invention and shows that the rear of the J- shaped frame 32 is formed by one pipe and a rear suspension 63 (the details will be described later) is attached to the J-shaped frame 32. A reference number 65 denotes a brake lever for the rear wheel and 66 denotes a brake lever for the front wheel.

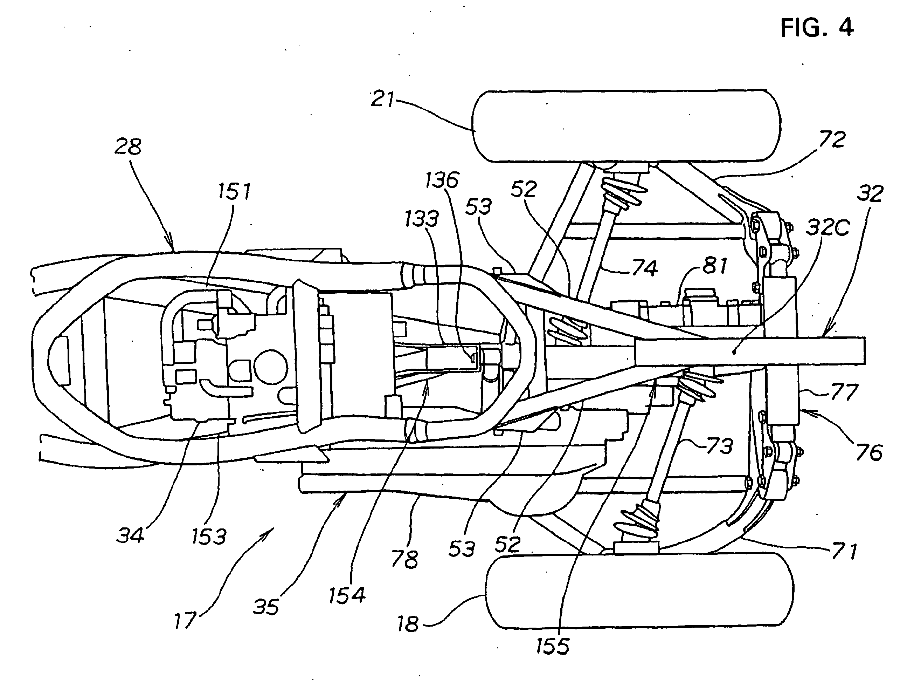

Fig. 4 is a plan showing the main part of the three-wheeled vehicle according to the invention. Fig. 4 shows structure that suspension arms 71, 72 are attached to the right and the left of the J-shaped frame 32, holders (not shown) are attached to the ends of these suspension arms 71, 72, the rear wheels 18, 21 are rotatably attached to these holders and these rear wheels 18, 21 are driven by drive shafts 73, 74 extended from transmission mechanism 35 of the power unit 17.

A reference number 76 denotes a shock absorber as resilient means composed of a damper 77 and a helical compression spring (not shown) and the shock absorber is coupled to the respective sides of the right and left suspension arms 72, 71.

The center upper frame 28 is a substantially elliptic member and the housing box 22 (see Fig. 1) having a substantially similar bottom is attached to its upper part.
The transmission mechanism 35 of the power unit 17 is composed of a belt-type continuously variable transmission 78 extended backward from the rear of the left of the engine 34 and a gear box 81 coupled to the rear of the continuously variable transmission 78, the drive shaft 74 is connected to the output shaft on the front side of the gear box 81 and the drive shaft 73 is connected to the output shaft on the rear side of the gear box 81.

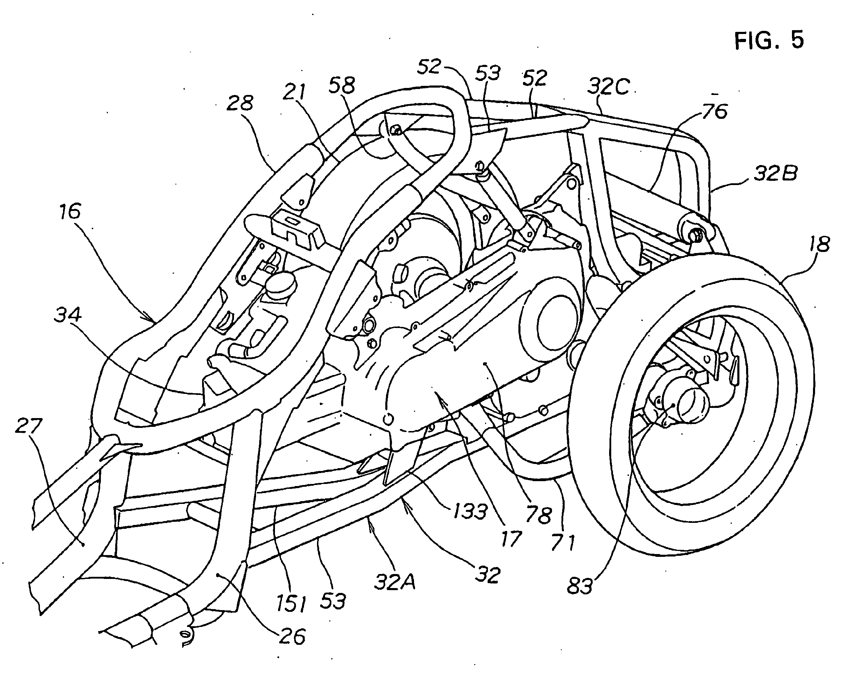

Fig. 5 is a first perspective view showing the three-wheeled vehicle according to the invention and shows that the front of the J-shaped frame 32 is attached to the respective rears of the lower pipes 26, 27 of the body frame 16 . A reference number 83 denotes a holder (the inside holder 83 is not shown).

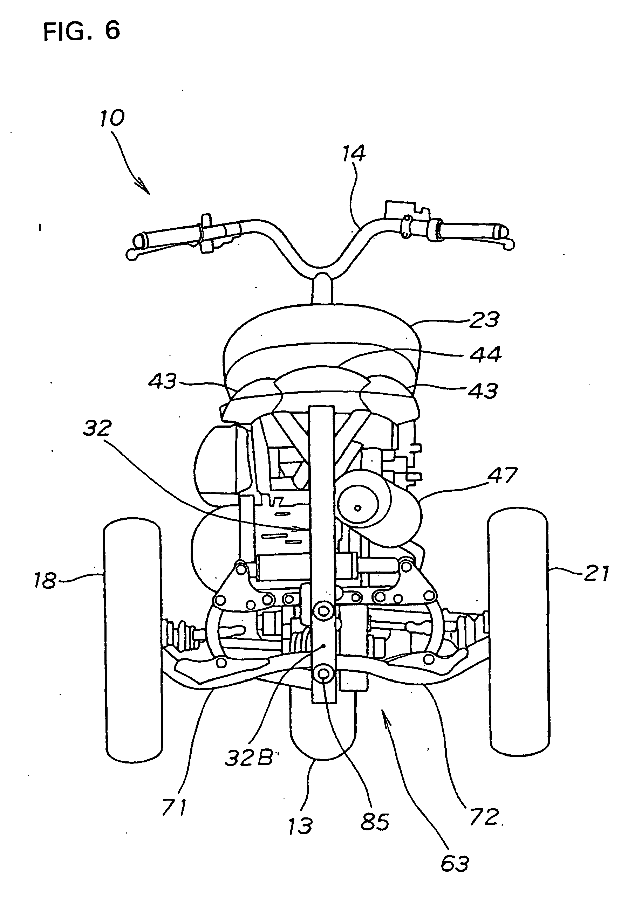

Fig. 6 is a back view showing the three-wheeled vehicle according to the invention, the inclined part at the rear end 32B of the J-shaped frame 32 is a substantially perpendicular part in a state in which nobody rides on the three-wheeledvehicle 10 and the rears of the suspension arms 71, 72 are attached to the inclined part at the rear end 32B. A reference number 85 denotes a rear swing shaft for swingably attaching the rears of the suspension arms 71, 72 to the inclined part at the rear end 32B.

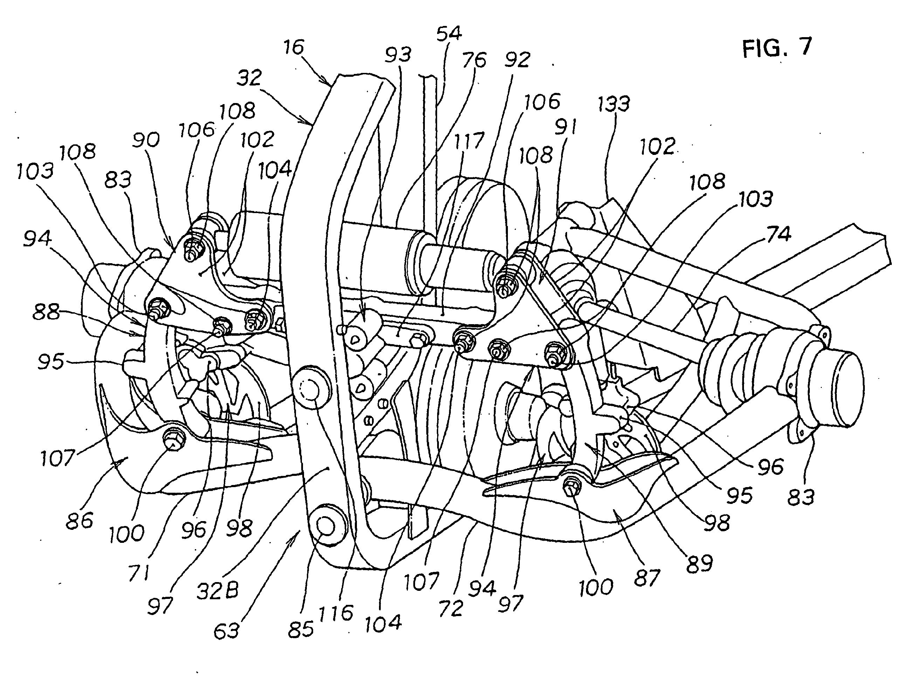

Fig. 7 is a second perspective view showing the three-wheeled vehicle according to the invention and shows the rear suspension 63 in which the suspension arms 72, 71 are extended right and left from the J-shaped frame 32, the holders 83 are attached to the respective ends of these suspension arms 72, 71, arc-shaped links 89, 88 are swingably attached to the respective upper parts of the suspension arms 72 , 71 via mounting brackets 87, 86, bell cranks 91, 90 of a substantially L type when they are viewed from the side are swingably attached to the respective ends of these arc-shaped links 89, 88, the shock absorber 76 is laid between the respective upper ends of these bell cranks 91, 90, a bar-shaped connecting member 92 is laid between the respective ends of the sides of the bell cranks 91, 90 and the connecting member 92 is attached to the inclined part at the rear end 32B of the J-shaped frame 32 via the swinging mechanism 93 as a swinging shock absorber.

The arc-shaped link 88 and the bell crank 90, and the arc-shaped link 89 and the bell crank 91 form coupling means 94, 94 for coupling the shock absorber 76 to the suspension arms 71, 72.

The arc-shaped links 88, 89 are respectively provided with a side protruded part 95 in the middle and brake calipers 96, 96 for braking each swing of the arc-shaped links 88, 89 are attached to these side protruded parts 95 . Reference numbers 97, 97 denote a braking device provided with the brake caliper 96 and each disc 98, 98 is held between the brake calipers 96, 96 by oil pressure. The discs 98, 98 are members attached to the suspension arms 71, 72. A reference number 100 denotes a bolt that functions as each swinging shaft of the arc-shaped links 88, 89.

Each bell crank 90, 91 is composed of two crank plates 102, 102 and is provided with a first bolt 103 as a first fulcrum, a second bolt 104 as a second fulcrum and a third bolt 106 as a third fulcrum. A reference number 107 denotes a fourth bolt as a stopper pin for regulating the stretch of the shock absorber 76 and 108, --- (--- shows plurality, hereinafter similar) denote a nut screwed on the first bolt 103 to the fourth bolt 107.

The swinging mechanism 93 is a member for allowing the rightward and leftward swings of the body frame 16 for the suspension arms 71, 72 in cornering, increasing reaction force with included elasticity as the inclination of the swing becomes large and returning the body frame to an original position.

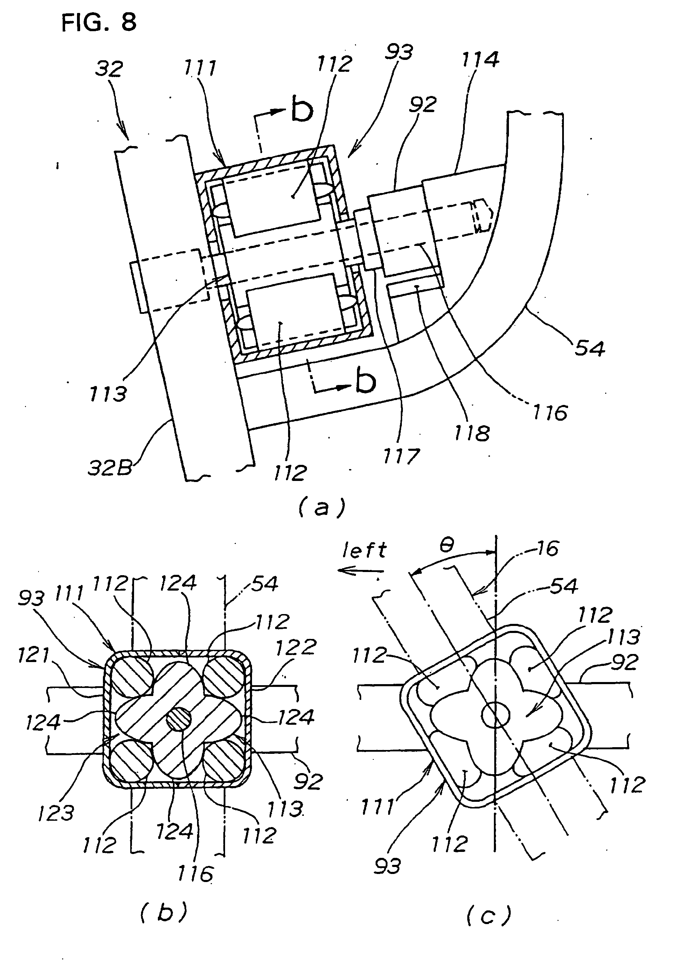

Figs. 8A to 8C are explanatory drawings for explaining the swinging mechanism according to the invention, Fig. 8A is a side view (a partial sectional view) , Fig. 8B is a sectional view viewed along a line b-b in Fig. 8A and Fig. 8C shows action in Fig. 8B.
As shown in Fig. 8A, the swinging mechanism 93 is so-called "Neidhart damper" composed of a case 111 attached to the inclined part at the rear end 32B of the J-shaped frame 32 and the rear of the L-type pipe 54, damper rubbers 112, --- housed in the case 111, a pressing member 113 attached to the connecting member 92 for pressing these damper rubbers 112, --- and a through pin 116 which pierces the pressing member 113 and the connecting member 92 and both ends of which are supported by an end support 114 provided to the L-type pipe 54 and the inclined part at the rear end 2B. A reference number 117 denotes an attachment provided to the pressing member 113 to bolt the pressing member 113 on the connecting member 92 and 118 denotes a swing regulator integrated with the end support 114 to regulate the swing of the connecting member 92.

As shown in Fig. 8B, the case 111 is a member including a left case 121 and a right case 122, a damper housing 123 is provided to the inside, the damper rubbers 112, --- are arranged at the four corners of the damper housing 123 and are pressed by convex pressing parts 124, --- of the pressing member 113.

As shown in Fig. 8C, the body frame 16 is swung on the left of the body (an arrow left in Fig. 8C shows the left of the body) for the connecting member 92 coupled to the side of the suspension arm, when the L-type pipe 54 is inclined by an angle θ, the case 111 of the swinging mechanism 93 is relatively revolved with the pressing member 113, the damper rubbers 112, --- housed in the case 111 are compressed between the case 111 and the pressing member 113 and reactive force that tries to return the case 111 and further, the body frame 16 to each original position (each position shown in Fig. 8A) generates.

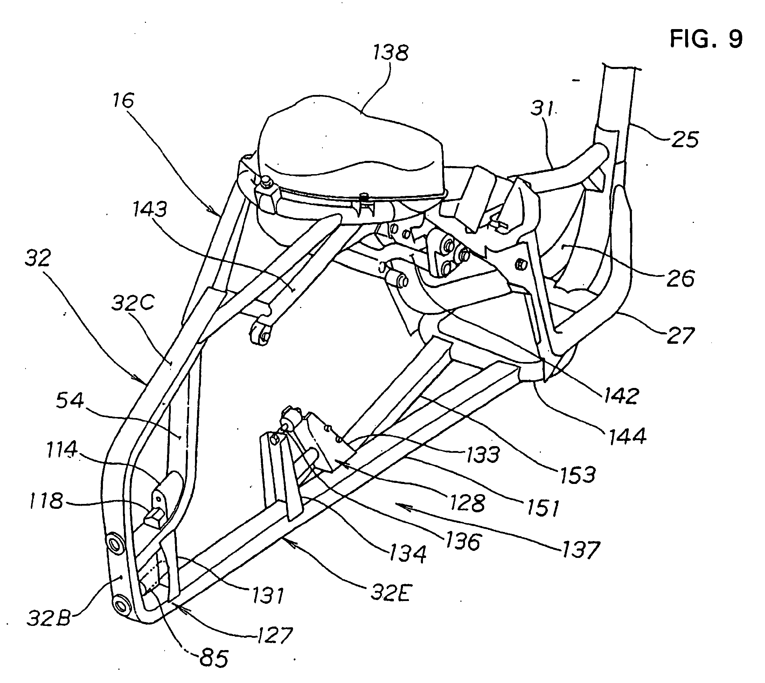

Fig. 9 is a third perspective view (diagonally viewed fromtherearofthebodyframe) showing the three-wheeledvehicle according to the invention and shows that rear fittings 127 for swingably attaching the respective rears of the suspension arms 71, 72 (see Fig. 7) and front fittings 128 for swingably attaching the respective fronts of the suspension arms 71, 72 are provided to the J-shaped frame 32.

The rear fittings 127 are composed of the inclined part at the rear end 32B and a vertical bracket 131 connecting the L-type pipe 54 and a lower horizontal part 32E (described later) , and the rear swing shaft 85 (see Fig. 6) for supporting the respective rears of the suspension arms 71, 72 is attached to the inclined part at the rear end 32B and the vertical bracket 131.

The front fittings 128 is composed of a front stand 133 and a rear stand 134 which stand at an interval on the lower horizontal part 32E and a front swing shaft 136 for supporting the respective fronts of the suspension arms 71, 72 is attached to the front stand 133 and the rear stand 134.

The front swing shaft 136 and the rear swing shaft 85 form a swinging shaft 137 for crosswise swinging the body frame 16.

A reference number 138 denotes a fuel tank, 142 and 143 denote an engine mounting vibration insulating link for mounting the engine 34 on the body frame 16 and 144 denotes a U-shaped pipe attached to a lower part of each rear of the lower pipes 26, 27 to attach the end of the lower horizontal part 32E of the J-shaped frame 32.

Fig. 5 shows the embodiment that the front ends of the lower horizontal part 32A branched in a Y type are directly attached to the lower pipes 26, 27, however, Fig. 9 shows another embodiment that the J-shaped frame 32 is composed of the lower horizontal part 32E branched in a Y type, the inclined part at the rear end 32B and an upper inclined part 32C and the front ends of the lower horizontal part 32E are attached to the lower pipes 26, 27 via the U-shaped pipe 144.

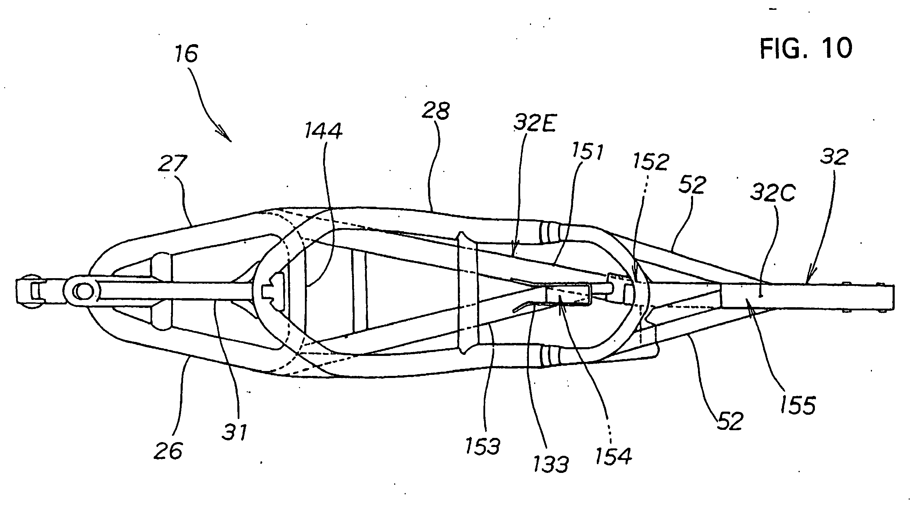

Fig. 10 is a plan showing the body frame according to the invention and shows that the lower horizontal part 32E of the J-shaped frame 32 is branched in a Y type halfway, the branched parts are coupled to the rear of the U-shaped pipe 144 and the coupling pipes 52, 52 are extended in a Y type from the upper inclined part 32C of the J-shaped frame 32 to the center upper frame 28.

The lower horizontal part 32E (and the lower horizontal part 32A (see Fig. 5) ) are detailedly a part formed by bending one long first pipe 151 halfway and connecting a second pipe 153 to the vicinity of a bended part 152 of the first pipe 151. A reference number 154 denotes a Y-type branched part acquired by connecting the second pipe 153 to the first pipe 151 and branching in a Y type and 155 denotes a Y-type branched part acquired by connecting the coupling pipes 52, 52 to the upper inclined part 32C and branching in a Y type.
The first pipe 151 is a member including the inclined part at the rear end 32B and the upper inclined part 32C and is acquired by removing the second pipe 153 from the J-shaped frame 32.

The connection of the front of a lower part of the J-shaped frame 32 and the U-shaped pipe 144 can be enhanced by forming the lower horizontal part 32E in the Y type as described above and the connection of an upper part of the rear of the J-shaped frame 32 and the rear of the center upper frame 28 can be enhanced by arranging the coupling pipes 52, 52 in the Y type. The connection of the front of the lower part of the J-shaped frame 32 and the lower pipes 26, 27 can be enhanced by forming the lower horizontal part 32A in the Y type as shown in Fig. 5.

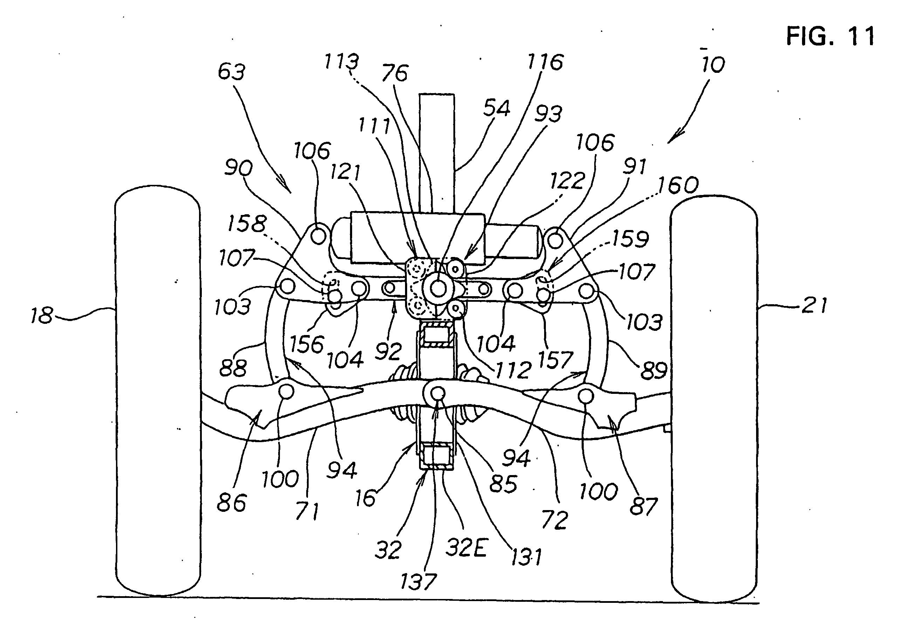

Fig. 11 is aback view showing the rear suspension according to the invention and shows the rear suspension 63 in a state in which a rider rides the three-wheeled vehicle. The inclined part at the rear end 32B and the upper inclined part 32C of the J-shaped frame 32 respectively shown in Fig. 9 are omitted. The right case 122 of the swinging mechanism 93 shown in Fig. 8B is shown by an imaginary line. At this time, the L-type pipe 54 of the body frame 16 is substantially vertical and the connecting member 92 is substantially horizontal.

The connect ing member 92 is a member provided with fan-type parts 156, 157 to each of which each arc-shaped long hole 158, 159 is provided at both ends and the inclination angle of each bell crank 90, 91 with the connecting member 92 is regulated by piercing each fourth bolt 107, 107 as a stopper pin in each arc-shaped long hole 158, 159. The inclination angle of the bell cranks 90, 91 varies depending upon the inclination angle of the suspension arms 71, 72, that is, quantity in which the rear wheels 18, 21 are vertically moved. In other words, the arc-shaped long holes 158, 159 are parts for regulating the quantity in which the rear wheels 18, 21 are vertically moved.

The action of the above-mentioned rear suspension 63 will be described below.

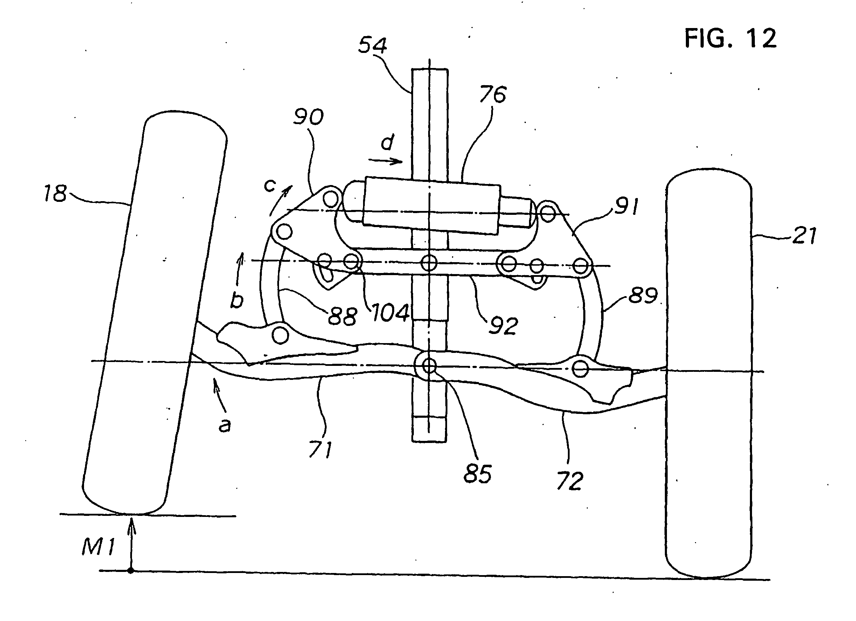

Fig. 12 shows the first action of the rear suspension according to the invention.
For example, when the left rear wheel 18 is moved upward by the amount of movement M1 from a state shown in Fig. 11, the suspension arm 71 is swung upward as shown by an arrow a with the rear swing shaft 85 and the front swing shaft 136 (see Fig. 9) in the center, hereby the arc-shaped link 88 is lifted as shown by an arrow b, the bell crank 90 is swung in a direction shown by an arrow c with the second bolt 104 as a fulcrum and the shock absorber 76 is pressed and contracted in a direction shown by an arrow d. Hereby, the transmission of shock caused by the lifting of the left rear wheel 18 to the side of the body frame 16 (see Fig. 10) is reduced.
At this time, as the other suspension arm 72 is in the same state as that shown in Fig. 11, the connecting member 92 is in a substantially horizontal state as in Fig. 11.

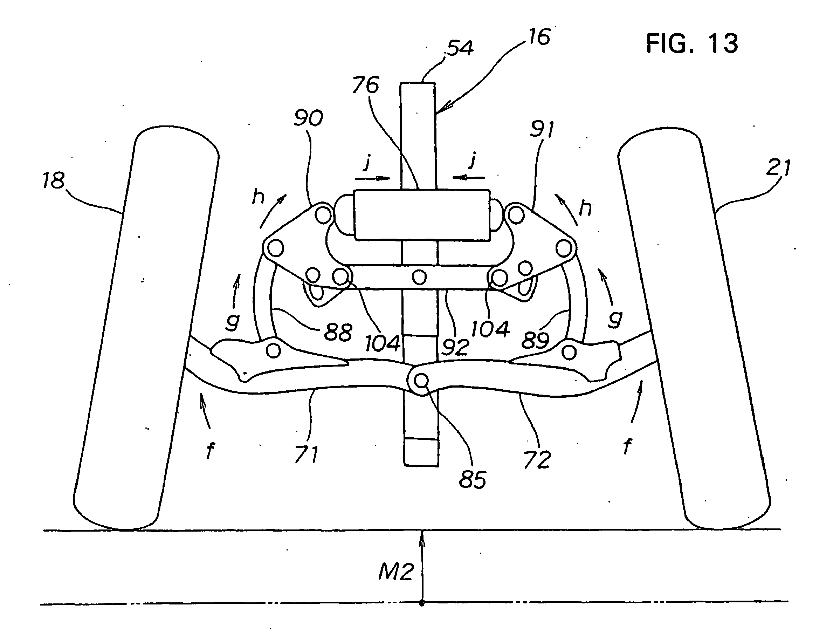

Fig. 13 shows the second action of the rear suspension according to the invention.
When the rear wheels 18, 21 are both lifted by the amount of movement M2 or the body frame 16 is lowered by the amount of movement M2 for the rear wheels 18, 21 from the state shown in Fig. 11, the suspension arms 71, 72 are swung upward as shown by arrows f , f wi th the rear swing shaft 85 and the f ront swing shaft 136 (see Fig. 9) in the center, hereby the arc-shaped links 88, 89 are lifted as shown by arrows g, g, make bell cranks 90, 91 swing in each direction shown by arrows h, h with the second bolt 104 as a fulcrum and press and contract the shock absorber 76 as shown by arrows j , j . As a result, buffer action is made by the shock absorber 76.

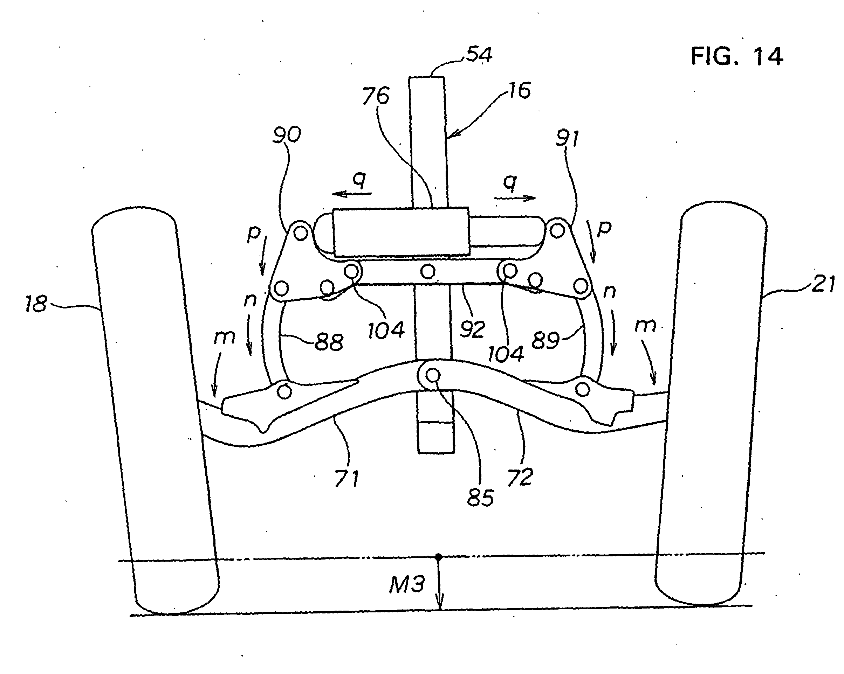

Fig. 14 shows the third action of the rear suspension according to the invention.
When the rear wheels 18, 21 are both lowered by the amount of movement M3 or the body frame 16 is lifted by the amount of movement M3 for the rear wheels 18, 21 from the state shown in Fig. 11, the suspension arms 71, 72 are swung downward as shown by arrows m, m with the rear swing shaft 85 and the front swing shaft 136 (see Fig. 9) in the center, hereby the arc-shaped links 88, 89 are lowered as shown by arrows n, n, make the bell cranks 90, 91 swing in each direction shown by arrows p, p with the second bolt 104 as a fulcrum and extend the shock absorber 76 as shown by arrows q, q. As a result, buffer action is made by the shock absorber 76.

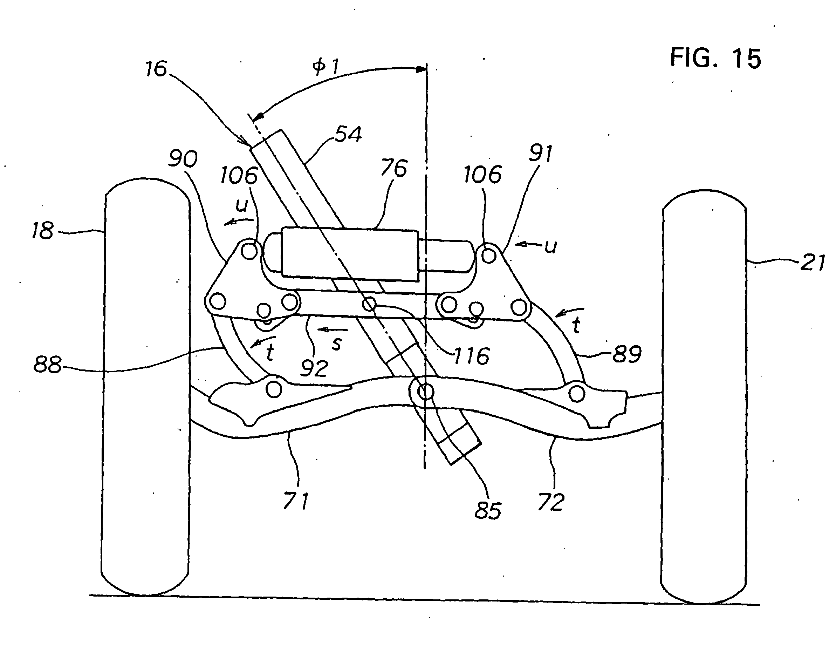

Fig. 15 shows the fourth action of the rear suspension according to the invention.
When the body frame 16, the L-type pipe 54 in this case is swung by an angle φ1 on the left side of the body from the state shown in Fig. 11, the connecting member 92 coupled to the L-type pipe 54 via the through pin 116 is moved in parallel leftward as shown by an arrow s. Hereby, the arc-shaped links 88, 89 are inclined as shown by arrows t, t and the bell cranks 90, 91 are moved in parallel as shown by arrows u, u. As an interval between the third bolts 106, 106 of the bell cranks 90, 91 is unchanged, the shock absorber 76 is not extended/contracted.

As at this time, the body frame 16 is swung for the connecting member 92, reaction force that tries to return the body frame 16 to the original position (that is, the position shown in Fig. 11) by the swinging mechanism generates as shown in Fig. 8C.

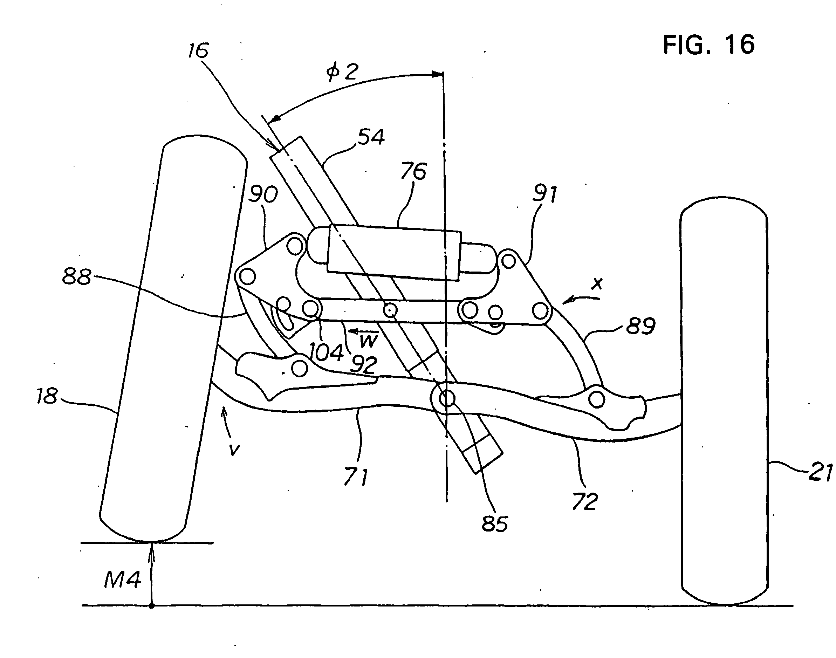

Fig. 16 shows the fifth action of the rear suspension according to the invention.
When the rear wheel 18 is lifted by the amount of movement M4 and the body frame 16, the L-type pipe 54 in this case is swung by an angle φ2 on the left side of the body from the state shown in Fig. 11, the suspension arm 71 is swung upward as shown by an arrow v with the rear swing shaft 85 and the front swing shaft 136 (see Fig. 9) in the center and the connecting member 92 is moved leftward as shown by an arrow w. Hereby, the arc-shaped link 88 is lifted, is inclined leftward, the arc-shaped link 89 is inclined leftward as shown by an arrow x, the bell crank 90 is swung clockwise with the second bolt 104 as a fulcrum, is moved leftward, the bell crank 91 is moved leftward, as a result presses and contracts the shock absorber 76 and makes buffer action.

As described in relation to Figs . 8C, 9 and 11, the invention is based upon the three-wheeled vehicle 10 (see Fig. 1) provided with the swinging mechanism 93 as a swinging shock absorber provided with the swinging shaft 137 for crosswise swinging the body frame 16 for the right and left two rear wheels 21, 18 and the damper rubber 112 that is located between the member (the pressing member 113) on the side of the rear wheels 18, 21 and the member (the case 111) on the side of the body frame 16 and generates reaction force which tries to return the body frame 16 to the original position when the body frame 16 is swung around the swinging shaft 137 and is first characterized in that the swinging mechanism 93 is configured as a mechanism in which the member (the pressing member 111) on the side of the rear wheels 18, 21 or the member (the case 111) on the side of the body frame 16 is swingably attached to the through pin 116 as a spindle provided separately from the swinging shaft 137.

The damper rubber 112 can be provided around the through pin 116 by providing the through pin 116 separately from the swinging shaft 137 . As a load of the through pin 116 is smaller, compared with a load of the swinging shaft 137 and is not a member for coupling the front body and the rear body differently f rom that in the conventional type, the through pin can be thinned and the swinging mechanism 93 can be miniaturized. Besides, large space around the swinging shaft 137 is not required and the degree of freedom in arranging the swinging shaft 137 can be increased.

The member (the case 111) on the side of the body frame 16 is attached to the rear of the body frame 16.
The swinging mechanism 93 can be maintained from the rear of the body frame 16 and the maintenance is facilitated.

When the right and left suspension arms 72, 71 are coupled to the body frame 16 via the shock absorber 7 6 and the coupling means 94, 94 provided at both ends of the shock absorber 76, the member (the pressing member 113) on the side of the rear wheels 18, 21 is attached to the coupling means 94, 94 via the connecting member 92.

As the shock absorber 76 can make buffer action upon the suspension arms 71, 72 and the member on the side of the rear wheels is attached to the coupling means 94 for coupling the suspension arms 71, 72 to the shockabsorption 76, an installation member for the member on the side of the rear wheels is not required to be specially provided and the number of parts can be prevented from being increased.

The coupling means 94 is composed of the arc-shaped links 89, 88 swingably attached to the right and left suspension arms 72, 71 and the substantially L-type bell cranks 91, 90 swingably attached to the respective ends of the arc-shaped links 89, 88, when the first bolt 103 is provided to a curved part of each bell crank 91, 90 and the second and third bolts 104, 106 are provided to the two ends of each bell crank 91, 90, the first bolt 103 is attached to the end of each arc-shaped link 89, 88, the second bolts 104 are connected via the connecting member 92, the connecting member 92 is swingably attached to the side of the body frame 16, the third bolt 106 is attached to each end of the shock absorber 76 and the pressing member 113 as the member on the side of the rear wheels 21, 18 is attached to the connecting member 92.

As the connecting member 92 is moved only in parallel by the right and left arc-shaped links 89, 88 even if the body frame 16 is swung crosswise, relative revolution is caused between the connecting member 92 and the body frame 16 and the damper rubber 112 can be pressed by the pressing member 113 attached to the connecting member 92 and the case 111 attached to the body frame 16.

The member on the side of the body frame 16 is a divided case 111 for housing the damper rubber 112.
As the member on the side of the body frame 16 is the divided case 111, the case 111 is disassembled and the swinging mechanism 93 can be easily maintained.

The invention produces the following effect owing to the above-mentioned configuration.
For the three-wheeled vehicle provided with the swinging mechanism according to Claim 1, as the swinging mechanism is configured as a mechanism in which the member on the side of the rear wheels or the member on the side of the body frame is swingably attached to the spindle provided separately from the swinging shaft, the resilient member can be provided around the spindle by providing the spindle separately from the swinging shaft and if the spindle is thinned, the swinging shock absorber can be miniaturized. Besides, the large space around the swinging shaft is not required and the degree of freedom in arranging the swinging shaft can be increased.

For the three-wheeled vehicle provided with the swinging mechanism according to Claim 2, as the member on the side of the body frame is attached to the rear of the body frame, the swinging shock absorber can be maintained from the rear of the body frame and the maintenance is facilitated.

For the three-wheeled vehicle provided with the swinging mechanism according to Claim 3, as the member on the side of the rear wheels is attached to the coupling means when the right and left suspension arms are coupled to the body frame via the resilient means and the coupling means provided at both ends of the resilient means, the buffer action upon the suspension arms can be made by the resilient means, no installation member for the member on the side of the rear wheels is required to be specially provided to attach the member on the rear wheels to the coupling means for coupling the suspension arms to the resilient means and the number of parts can be prevented from being increased.

For the three-wheeled vehicle provided with the swinging mechanism according to Claim 4, as the coupling means is composed of the links swingably attached to the right and left suspension arms and the substantially L- type bell cranks swingably attached to the respective ends of these links, the first fulcrum is attached to the end of each link, the second fulcrums are connected via the connecting member, the connecting member is swingably attached to the side of the body, the third fulcrum is attached to each end of the resilient means and the member on the side of the rear wheels is attached to the connecting means when the first fulcrum is respectively provided to the curved parts of these bell cranks and the second and third fulcrums are provided to the two ends of each bell crank, the connecting member is moved only in parallel by the right and left links even if the body frame is swung crosswise, relative revolution is caused between the connecting member and the body frame, the resilient means is pressed by the member on the side of the rear wheels attached to the connecting member and the member on the side of the body frame and buffer effect can be produced.

For the three-wheeled vehicle provided with the swinging mechanism according to Claim 5, as the member on the side of the body frame is the divided case for housing the resilient member, the case is disassembled and the swinging shock absorber can be easily maintained.

Solving Means: In a three-wheeled vehicle provided with a swinging mechanism 93 provided with a swinging shaft 137 for crosswise swinging a body frame 16 for right and left two rear wheels 21, 18 and a damper rubber 112 that is located between a member (a pressing member 113) on the side of the rear wheels 21, 18 and a member (a case 111) on the side of the body frame 16 when the body frame 16 is swung around the swinging shaft 137 and generates reaction force that tries to return the body frame 16 to an original position, the swinging mechanism 93 is configured as a mechanism in which the pressing member 113 or the case 111 is swingablyattached to a throughpin 116 provided separately from the swinging shaft 137.
Effect: The damper rubber can be provided around the through pin by providing the through pin separately from the swinging shaft and if the through pin is thinned, the swinging mechanism canbeminiaturized. Besides, large space isnot requiredaround the swinging shaft and the degree of freedom in arranging the swinging shaft can be increased.

## Claims

1. A three-wheeled vehicle provided with a swinging mechanism (93) as a swinging shock absorber provided with a swinging shaft (137) for crosswise swinging a body frame (16) on the side of right and left two rear wheels (21, 18) and a member (112) between a member (113) on the side of the rear wheels (21, 18) and a member (111) on the side of the body frame (16) for generating reaction force that tries to return the body frame (16) to an original position when the body frame (16) is swung around the swinging shaft (137), wherein:
the swinging shock absorber (93) is provided with a spindle (116) separately from the swinging shaft (137); and
either of the member (113) on the side of the rear wheels (21, 18) or the member (111) on the side of the body frame (16) is turnably attached to the spindle (116),
**characterized in that**
the member (112) for generating reaction force is a resilient member.

2. A three-wheeled vehicle provided with a swinging mechanism according to claim 1, wherein:
the member (111) on the side of the body frame (16) is attached to the rear of the body frame (16).

3. A three-wheeled vehicle provided with a swinging mechanism according to claim 1 or 2, wherein:
the member (113) on the side of the rear wheels (21, 18) is attached to coupling means (94, 94) when right and left suspension arms (71, 72) are coupled to the body frame (16) via resilient means (76) and the coupling means (94, 94) provided at both ends of the resilient means (76).

4. A three-wheeled vehicle provided with a swinging mechanism according to claim 3, wherein:
the coupling means (94, 94) is composed of links (88, 89) swingably attached to the right and left suspension arms (71, 72) and substantially L-type bell cranks (90, 91) swingably attached to the respective ends of these links (88, 89); and
when a first fulcrum (103) is respectively provided to curved parts of these bell cranks (90, 91) and second and third fulcrums (104, 106) are provided to two ends of each bell crank (90, 91), the first fulcrum (103) is attached to the end of each link (88, 89), the second fulcrums (104) are connected via a connecting member (92), the connecting member (92) is swingably attached to the side of the body (16), the third fulcrum (106) is attached to each end of the resilient means (76) and the member (113) on the side of the rear wheels (21, 18) is attached to the connecting (92) member.

5. A three-wheeled vehicle provided with a swinging mechanism according to any of claims 1 to 4, wherein:
the member (111) on the side of the body frame (16) is a divided case for housing the resilient member (112).

## Patentansprüche

1. Dreirädriges Fahrzeug, welches mit einem Schwingungsmechanismus (93) als Schwingungsstoßdämpfer ausgestattet ist, der vorgesehen ist mit einer Schwenkwelle (137) für eine quer verlaufende Schwingung eines Rumpfrahmens (16) aufseiten von zwei rechten und linken Hinterrädern (21, 18), sowie einem Element (112) zwischen einem Element (113) aufseiten der hinteren Räder (21, 18) und einem Element (111) aufseiten des Rumpfrahmens zur Erzeugung einer Reaktionskraft, welche versucht, den Rumpfrahmen (16) in seine Ursprungsstellung zurückzubringen, wenn der Rumpfrahmen (16) um die Schwenkwelle (137) herum geschwenkt ist, wobei:
der Schwingungsstoßdämpfer (93) mit einer von der Schwenkwelle (137) getrennten Achse (116) vorgesehen ist; und
entweder das Element (113) aufseiten der Hinterräder (21, 18) oder das Element (111) aufseiten des Rumpfrahmens (16) drehbar an der Achse (116) angebracht ist,
**dadurch gekennzeichnet, dass**
das Element (112) zum Erzeugen der Reaktionskraft ein elastisches Element ist.

2. Dreirädriges Fahrzeug, welches mit einem Schwingungsmechanismus nach Anspruch 1 ausgestattet ist, wobei:
das Element (111) aufseiten des Rumpfrahmens (16) an der Rückseite des Rumpfrahmens (16) angebracht ist.

3. Dreirädriges Fahrzeug, welches mit einem Schwingungsmechanismus nach Anspruch 1 oder 2 ausgestattet ist, wobei:
das Element (113) aufseiten der Hinterräder (21, 18) an einem Kopplungsmittel (94, 94) angebracht ist, wenn rechte und linke Aufhängungsarme (71, 72) mit dem Rumpfrahmen (16) über elastische Mittel (76) gekoppelt sind und das Kopplungsmittel (94, 94) an beiden Enden des elastischen Mittels (76) vorgesehen ist.

4. Dreirädriges Fahrzeug, welches mit einem Schwingungsmechanismus nach Anspruch 3 ausgestattet ist, wobei:
das Kopplungsmittel (94, 94) aus Verbindungsgliedern (88, 89), welche schwenkbar an den rechten und linken Aufhängungsarmen (71, 72) angebracht sind, und im Wesentlichen L-artigen Winkelhebeln (90, 91), welche schwenkbar an den jeweiligen Enden dieser Verbindungsglieder (88, 89) angebracht sind, aufgebaut ist; und
wobei dann, wenn ein erster Schwenkpunkt (103) jeweils an gekrümmten Teilen dieser Winkelhebel (90, 91) vorgesehen ist und zweite und dritte Schwenkpunkte (104, 106) an den beiden Enden jedes Winkelhebels (90, 91) vorgesehen sind, der erste Schwenkpunkt (103) an dem Ende jedes Verbindungsglieds (88, 89) angebracht ist, die zweiten Schwenkpunkte (104) über ein Verbindungselement (92) verbunden sind, wobei das Verbindungselement (92) schwenkbar an der Seite des Rumpfs (16) angebracht ist, der dritte Schwenkpunkt (106) an jedem Ende des elastischen Mittels (76) angebracht ist und das Element (113) aufseiten der Hinterräder (21, 18) an dem Verbindungselement (92) angebracht ist.

5. Dreirädriges Fahrzeug, welches mit einem Schwingungsmechanismus nach einem der Ansprüche 1 bis 4 ausgestattet ist, wobei:
das Element (111) aufseiten des Rumpfrahmens (16) ein unterteiltes Gehäuse zur Unterbringung des elastischen Elements (112) ist.

## Revendications

1. Véhicule à trois roues doté d'un mécanisme oscillant (93) comme un amortisseur oscillant doté d'un axe oscillant (137) pour l'oscillation transversale d'une ossature de caisse (16) sur le côté de deux roues arrière gauche et droite (21, 18) et un élément (112) entre un élément (113) sur le côté des roues arrière (21, 18) et un élément (111) sur le côté de l'ossature de caisse (16) pour générer une force de réaction qui essaie de remettre l'ossature de caisse (16) dans une position d'origine quand l'ossature de caisse (16) oscille autour de l'axe oscillant (137), dans lequel :
l'amortisseur de choc d'oscillation (93) est doté d'une tige (116) séparément de l'axe oscillant (137) ; et
l'un de l'élément (113) sur le côté des roues arrière (21, 18) ou l'élément (111) sur le côté de l'ossature de caisse (16) est fixé en rotation à l'axe (116) ,
**caractérisé en ce que**
l'élément (112) pour générer une force de réaction est un élément flexible.

2. Véhicule à trois roues doté d'un mécanisme oscillant selon la revendication 1, dans lequel :
l'élément (111) sur le côté de l'ossature de caisse (16) est fixé à l'arrière de l'ossature de caisse (16).

3. Véhicule à trois roues doté d'un mécanisme oscillant selon les revendications 1 ou 2, dans lequel :
l'élément (113) sur le côté des roues arrière (21, 18) est fixé à un moyen de couplage (94, 94) lorsque les bras de suspension droit et gauche (71, 72) sont couplés à l'ossature de caisse (16) par l'intermédiaire d'un moyen flexible (76) et le moyen de couplage (94, 94) disposé aux deux extrémités du moyen flexible (76).

4. Véhicule à trois roues doté d'un mécanisme oscillant selon la revendication 3, dans lequel :
le moyen de couplage (94, 94) est composé de liaisons (88, 89) fixées de façon oscillante aux bras de suspension droit et gauche (71, 72) et des leviers coudés sensiblement en L (90, 91) fixés de façon oscillante aux extrémités respectives de ces liaisons (88, 89) ; et
lorsqu'un premier point d'oscillation (103) est respectivement fourni aux parties incurvées de ces leviers coudés (90, 91) et un second et un troisième points d'oscillation (104, 106) sont fournis aux deux extrémités de chaque levier coudé (90, 91), le premier point d'oscillation (103) est fixé à l'extrémité de chaque liaison (88, 89), les seconds points d'oscillation (104) sont raccordés par l'intermédiaire d'un élément de raccordement (92), l'élément de raccordement (92) est fixé de façon oscillante au côté de la caisse (16), le troisième point d'oscillation (106) est fixé à chaque extrémité du moyen flexible (76) et l'élément (113) sur le côté des roues arrière (21, 18) est fixé à l'élément de raccordement (92).

5. Véhicule à trois roues doté d'un mécanisme oscillant selon l'une quelconque des revendications 1 à 4, dans lequel :
l'élément (111) sur le côté de l'ossature de caisse (16) est un boîtier divisé pour contenir l'élément flexible (112).
